# EUROPEAN PATENT APPLICATION

(11) **EP 0 687 095 A2**
(43) Date of publication of application: **13.12.1995**
(21) Application number: 95108195.9
(22) Date of filing: 29.05.1995
(51) Int. Cl.: H04M 3/50, H04M 3/36

(54) **Telecommunication system with internal predictive outdial calling system**

(30) Priority: 31.05.1994 US 250881
(71) Applicant: ROCKWELL INTERNATIONAL CORPORATION, Downers Grove, Illinois 60515 (US)
(72) Inventor: Sumner, Roger A., Batavia, Illinois 60510 (US); Michelson, Mark J., Elburn, Illinois 60119 (US); Parsons, Nick, Naperville, Illinois 60540 (US)
(74) Representative: Schwepfinger, Karl-Heinz, Dipl.-Ing.

(57) **Abstract**

A telecommunication system (10) having an automatic call distributor (12) with a multiport switch (14) controlled by a central control processing unit (16) with an associated automatic call distributor memory (18) for selectively interconnecting telephonic calls between internal telephonic units (20) coupled with the call distributor (12) and external telephonic units (22) of an external telephonic network (26), an internal predictive outdial calling system (11) with a campaign driver (40) at the automatic call distributor (12) for determining the pacing of outdial calls initiated by the automatic call distributor (12) in accordance with changing switching conditions at the multiport switch (14) and real time data (42) stored at the automatic call distributor memory (18) providing information relating to the changing switching conditions on a real time basis to enable real time adjustments to the pacing of outdial calls determined by the campaign driver (40).

## Description

### BACKGROUND OF THE INVENTION

### FIELD OF THE INVENTION:

This invention relates generally to the field of telephonic switching systems and, more particularly, to a telephonic switching system with an automatic call distributor which receives inbound telephone calls and places outbound telephone calls.

### DESCRIPTION OF THE RELATED ART INCLUDING INFORMATION DISCLOSED UNDER 37 C.F.R. SECTION 1.97-1.99

Telephonic switching systems having an automatic call distributor with a multiport switch controlled by a central control processing unit for selectively interconnecting a plurality of agent telephonic units with external telephonic units received from an external telephonic switching system are well known. Examples of such telephonic switching systems are shown U.S patent No. 5,268,903 of Jones et al. entitled "Multichannel Telephonic Switching Network With Different Signaling Formats and Connect/PBX Treatment Selectable For Each Channel"_{,} issued December 7, 1993; U.S patent No. 5,140,611 of Jones et al. entitled "Pulse Modulated Self-Clocking and Self-Synchronizing Data Transmission and Method for a Telephonic Communication Switching System", issued August 18, 1992; U.S patent No. 5,127,004 of Lenihan et al. entitled "Tone and Announcement Message Code Generator for a Telephonic Switching System and Method", issued June 30, 1992 and U.S patent No. 4,627,047 of Pitroda et al. entitled "Integrated Voice and Data Telecommunications Switching System", issued December 2, 1986.

Furthermore, such telephonic switching systems automatically outdial calls to external telephonic units and then connect the outdialed or outbound calls to agent telephonic units of the switching system. This provides for increased efficiency of the telephonic switching system, particularly in an automated call distribution environment, since certain groups of agents stationed at the agent telephonic units of the system are able to service incoming calls received at the switch from customers at external units and other groups of agents service outbound calls initiated from the system placed to potential customers at the external units. Frequently, the agents stationed at the agent telephonic units primarily service inbound calls received from external telephonic units and other agent units. During periods when the inbound call traffic load is selectively light, the agents are often reassigned to service outbound calling applications initiated by the system.

Frequently, known telecommunication systems have an automatic call distributor coupled with a host computer. The host computer coupled with a telephonic switch or a network of switches is equipment which is often provided by the user of the system. The host primarily provides access to database information specific to the particular user of the system as well as various computational and programming services. A telephonic switch or a network of telephonic switches often communicate to the mainframe host computer through the use of a transaction link interface. Known telecommunication systems frequently employ a predictive dialing feature which allows the host computer provided by the system user to generate call traffic for various applications at the telephonic switch by sending outdial requests. Predictive dialing automatically initiates many outbound calls from the system without the need of agents spending time to perform dialing and listening to dial tones, busy signals, ringing or answering machines. The outbound calls are connected by the switch to various agents as the calls are answered. Predictive dialing employs many complex mathematical algorithms which consider many factors including: the number of available agents, busy signals, disconnected numbers, the number of available telephone lines and the time of a call.

An automated outdial campaign in known systems is often initiated when there is a decrease in the number of received incoming telephone calls at the switch. Alternatively, a campaign of automated outbound calls is initiated as the sole source of call traffic for a particular group of agents. Disadvantageously, in known telephonic systems the automatic call distributor must provide the host computer with information regarding the operation of the switch and the host is responsible for pacing the sending of the outdial calls. The host computer must account for delays resulting from the transmission time from the call distributor to the host. Additionally, the host computer is provided with the burden of sending an outdial request. Upon receipt of the outdial request from the host computer, the call distributor must then initiate outdialing of calls to external telephonic units.

The pacing of the outbound calls at the host computer for the user of the system requires that the computation of the complex mathematical algorithms established to control the rate of placement of the outbound calls be performed at the host computer. This often results in a significantly larger processing load at the host computer than is desired by the user of the system. The processing required at the host computer to perform the pacing of the predictive dialing feature reduces the number of alternative tasks that could be performed at the host computer.

To achieve effective pacing of outdial calls, thereby reducing calling delays in queue, the automatic call distributor must continuously send information relating to changing call processing conditions at the switch to the host computer. This information is needed for the host data base computer to effectively predict the optimum outdial calling procedure. However, since the call switching and processing information must be sent to the host data base computer from the call distributor, an added transmission time delay results. Therefore, the host data base computer responsible for pacing the outdial calls does not have the most current information pertaining to the calling conditions at the switch. Disadvantageously, the host computer must account for this added delay in attempting to accurately pace the launching of outdial calls. Accordingly, in known telecommunication systems a highly skilled individual well versed in the parameters of the predictive outdialing algorithm must be available to program the host data base computer. A programmer at the host computer is required to determine when and how often to send paced outdial requests to the automatic call distributor.

Additionally, in telephonic switching systems in which the user of the system does not employ a host mainframe computer, outbound calling campaigns cannot be performed in an automated fashion. Thus, in order for outbound calls to be made in a system without a host computer to compute the pacing of the calls, each outbound call must be initiated by the agent spending time dialing at the agent unit, listening to call progression tones and waiting to determine if the outbound call will even be answered. Disadvantageously, this significantly decreases the overall call servicing efficiency of the agents at the system.

### SUMMARY OF THE INVENTION

It is therefore a principle objective of the present invention to provide a telecommunication system with an internal predictive outdial calling system in which the disadvantages of known telecommunication systems noted above are overcome by providing means at an automatic call distributor for determining the pacing of outdial calls initiated from the automatic call distributor and received at external telephonic units.

The objective is achieved in part by providing a telecommunication system having an automatic call distributor with a multiport switch controlled by a central control processing unit with an associated automatic call distributor memory for selectively connecting calls between internal telephonic units coupled with the call distributor and external telephonic units of an external telephonic network, and internal predictive outdial calling system having means at the automatic call distributor for determining the pacing of outdial calls initiated by the automatic call distributor in accordance with changing switching conditions at the multiport switch and means at the automatic call distributor for providing information relating to the changing switching conditions on a real time basis to enable real time adjustments to the pacing by the determining means.

The object is also achieved by providing a telecommunication system having an automatic call distributor with a multiport switch controlled by a central control processing unit with an associated automatic call distributor memory for selectively connecting calls between internal telephonic units coupled with the call distributor and external telephonic units of an external telephonic network and an internal predictive outdial calling system having means at the automatic call distributor for determining the pacing of outdial calls initiated by the automatic call distributor in accordance with preselected campaign definition information and means at the automatic call distributor for automatically providing said campaign definition information to the pacing determining means to enable automatic operation of the pacing determining means.

### BRIEF DESCRIPTION OF THE DRAWINGS

The foregoing objects and advantageous features of the invention will be explained in greater detail and others will be made apparent from the detailed description of the preferred embodiment of the present invention which is given with reference to the several figures of the drawing, in which:
Fig. 1 is a functional block diagram of the preferred embodiment of the telecommunication system of the present invention illustrating an automatic call distributor as interconnected with an external telephonic network; and
Fig. 2 is a flow chart of the preferred method of pacing outdial calls at the automatic call distributor by employment of the campaign driver of Fig. 1.

### DESCRIPTION OF THE PREFERRED EMBODIMENT

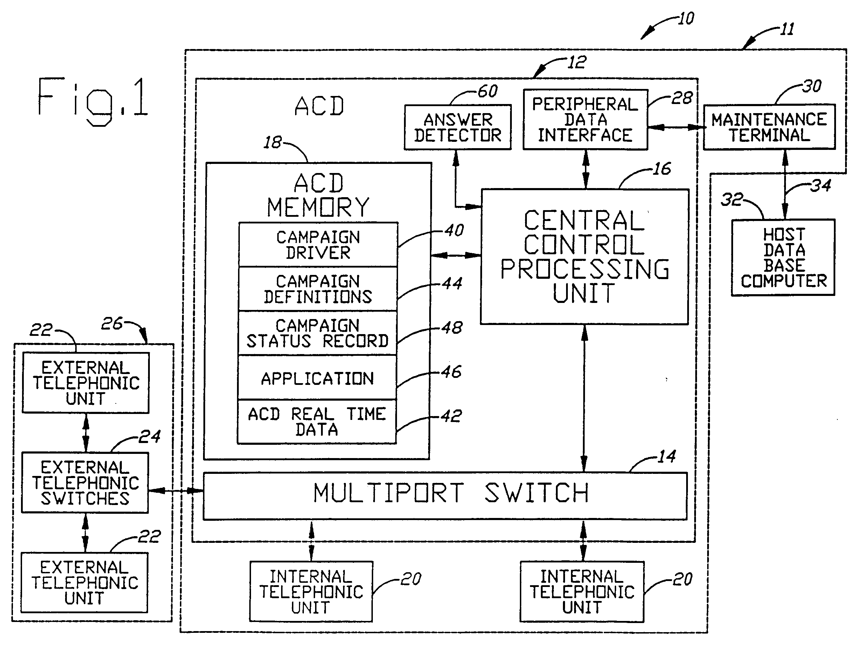

Referring to Fig. 1, telecommunication system 10 is shown having automatic call distributor (ACD) 12 with multiport switch 14 controlled by central control processing unit 16 in conjunction with an associated automatic call distributor memory 18. The ACD 12 selectively connects telephonic calls between a plurality of internal telephonic units 20 and external telephonic units 22 coupled with external telephonic switches 24 of an external telephonic network 26. The ACD 12 receives inbound telephonic calls initiated by the external telephonic units 22 of the external network 26 and distributes the calls received at the multiport switch 14 to agents stationed at the internal telephonic units 20 coupled with the automatic call distributor 12. Additionally, the internal predictive outdial calling system 11 of the present invention performs a campaign of outdial or outbound calls to external units 22 which is initiated from the ACD 12 and appropriately routes the outdial calls answered at external units to agents at the internal telephonic units 20 in accordance with a predetermined application 46 associated with the campaign. The agents at the internal telephonic units 20 preferably service the outdialed calls answered by individuals at the external telephonic units 22 in accordance with a particular telemarketing campaign scheme such as to providing customer service, returning calls previously made by the external units or presenting sales information to potential customers at the external units.

The central control processing unit 16 is the primary controller for the automatic call distributor 12. The processing power for the central control processing unit 16 is Preferably provided by a thirty-two bit Motorola 68030 microprocessor capable of either simplex or duplex operation. A peripheral data interface circuit card (PDI) 28 is coupled with the central control processing unit 16 of the ACD 12. The PDI circuit 28 has a Motorola 68000 microprocessor for providing the overall controlling functions of the PDI circuit. The peripheral data interface circuit 28 provides the interface mechanism between the central control processing unit 16 and a maintenance computer terminal 30. For further details of the operation of the peripheral data interface circuit 28 reference should be made to U.S. Patent Application Serial No. 07/976,131 of Kovarik filed November 12, 1992 entitled "Automatic Call Distributor With A Programmable Data Window Display System Method" and U.S. Patent Application Serial No. 08/060,381 of Park et al. filed May 11, 1993 entitled "Telecommunication System With Protocol For Asynchronous Data Communication Between Multiport Switch Control Processor and Information Support Terminal".

The maintenance terminal 30 is an OS/2 based work station computer terminal which provides an intelligent interface with the automatic call distributor 12. Preferably, a supervisor or system maintenance individual is stationed at the maintenance terminal 30 to oversee the operation of the ACD 12 and to perform diagnostics on the system. The maintenance terminal 30 is coupled with host data base computer 32.

The host computer 32 is preferably connected with a network of automatic call distributors for providing data base access to customer information such as names, addresses, and purchasing order data pertaining to customers at the external telephonic units. Customer information gathered by agents at the internal telephonic units 20 is entered at associated data terminals (not shown) for storage at the host computer 32. The host computer 32 is an external remote mainframe computer which selectively is provided by the purchaser or user of the system 10. The host data base computer communicates with the ACD 12 through the maintenance terminal via a transaction link 34. Generally, while the internal predictive outdial calling system of the present invention can be implemented in numerous types and sizes of automatic call distributors, it is preferably employed in a call distribution system of the type shown in U.S. patent No. 5,268,903 of Jones et al. entitled "Multichannel Telephonic Switching Network With Different Signaling Formats and Connect/PBX Treatment Selectable For Each Channel", issued December 7, 1993; U.S. patent No. 5,140,611 of Jones et al. entitled "Pulse Modulated Self-Clocking and Self-Synchronizing Data Transmission and Method for a Telephonic Communication Switching System", issued August 18, 1992; U.S. patent No. 5,127,004 of Lenihan et al. entitled "Tone and Announcement Message Code Generator for a Telephonic Switching System and Method", issued June 30, 1992 and U.S. patent No. 4,627,047 of Pitroda et al. entitled "Integrated Voice and Data Telecommunications Switching System", issued December 2, 1986.

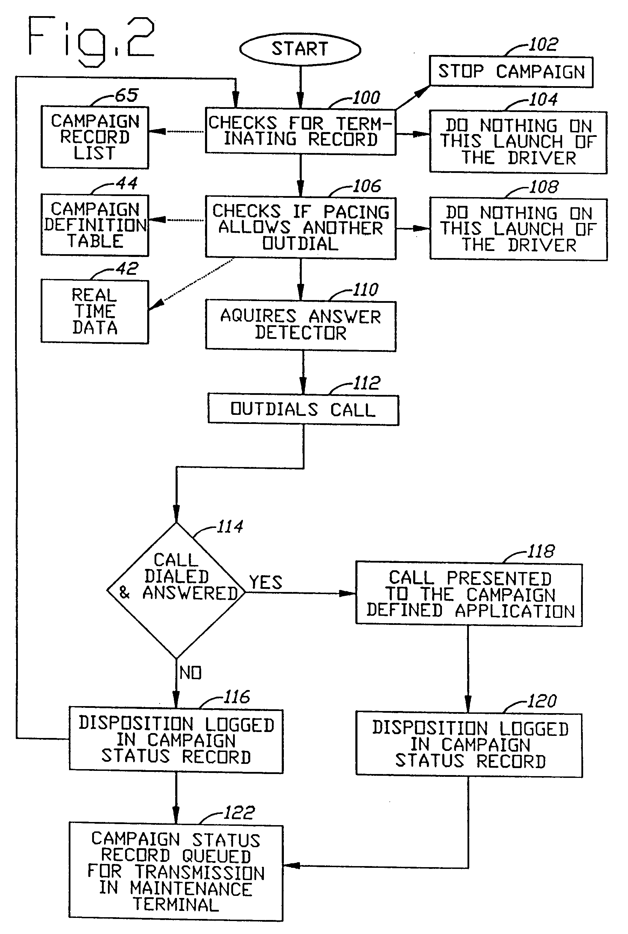

The central control processing unit 16 operates with the associated ACD memory 18 to drive the features of the internal predictive outdial calling system 11. A campaign driver 40 of the ACD memory 18 is a software entity which initiates or launches outbound calls from the ACD 12 to external telephonic units 22. The campaign driver 40 determines the pacing of outdial calls to external units 22 based on real time data statistics 42 regarding the operation of the switch 14 contained in the ACD memory 18. The ACD real time data table 42 at the ACD memory 18 contains statistical information regarding the continually changing call processing events at the multiport switch 14. The central control processing unit 16 monitors the call processing and call handling events as they occur in real time at the switch 14 and stores statistical information regarding the switch operation at the ACD real time data table 42 of the ACD memory 18. Preferably, the predictive outbound call dialing algorithms of the campaign driver stored in the ACD memory are of the type shown in U.S. Patent No. 4,881,261 of Oliphant et al., issued November 14, 1989 herein incorporated by reference and assigned to the same assignee of the present invention. The procedural processing steps of the campaign driver 40 are shown in greater detail in Fig. 2.

Campaign definitions 44 are stored at the ACD memory 18. A campaign is list of data created by the user to define a particular outbound calling scheme. The campaign definition table 44 contains the data which describes the purpose of the outbound calls. Preferably, the campaigns are employed in a telemarketing environment in which different campaign definitions each relate to different products or services. For example, one campaign is for outbound calls for selling knives, another campaign is for selling records and another campaign for conducting a customer survey. The campaign definition table 44 contains data relating to the type of product or service for a particular outbound calling campaign, the time allocation for the outbound calls or the time periods of the day in which the outbound calls are to be initiated. The campaign definition table 44 further designates a particular application to determine the call routing scheme of answered outdial calls directed to internal telephonic units.

The application 46 of the ACD memory 18 designated by a campaign definition 44 determines how a particular outbound call is routed or handled within the ACD 18 in response to an outbound call connection at the switch 14 with an external telephonic unit 22. Once an outbound or outdial call initiated from the switch 14 is connected at an external unit 22, the application code 46 in memory 18 is read by the central control processing unit 16 to determine how the outbound call is routed and serviced at the ACD 12. The campaign status record 48 of the ACD memory 18, contains information regarding the disposition of an outdial call. In response to the launching of an outdial call from the multiport switch 14, campaign status record 48 information is sent from the ACD memory 18 to the host computer 32 providing an indication of whether the outdial call was answered at an external unit 22.

In accordance with the present invention the campaign driver 40 of the automatic call distributor memory 18 determines the predictive dial pacing of outdial calls by the automatic call distributor 12. The central control processing unit 16 receives information relating to changing telephonic switching conditions at the multiport switch 14 and stores this information at the ACD real time data memory 42. The campaign driver 40 utilizes the information in the ACD real time data memory 42 relating to the changing switching conditions at the ACD 12 and the campaign definition table 44 information to enable real time adjustments to the pacing of outdial calls initiated by the ACD. The user at the host data base computer 32 inserts a list of outdial calls for a particular calling campaign to be performed at the ACD 12. Preferably, the campaign list of calls is stored on a portable floppy disk magnetic memory which is inserted at the host data base computer 32 and is sent to the maintenance terminal 30 via transaction link 34.

The pacing of outdial calls alternatively are performed in telecommunication system 10 without the employment of a host computer. In this alternative form of pacing outdial calls, the list of telephone outdial call information code numbers for a campaign are directly inserted at the maintenance terminal 30 and are read by campaign driver 40 running at the ACD 12. The campaign list sent to the ACD 12 either from the host computer 32 through the maintenance terminal 30 or directly by the maintenance terminal contains a plurality of outdial call information codes identifying particular external telephonic units 22 to receive outdial calls from the switch 14. Preferably, the outdial call information codes of the campaign record list 65 contain the telephone numbers of the external telephonic units 22 to receive outdial calls paced from the ACD 12 for a particular calling campaign.

The campaign driver 40 running at the ACD 12 accesses the campaign record list of outdial calling numbers to determine if a particular campaign has calling records to outdial. The campaign driver 40 accesses the campaign definition table 44 and the ACD real time data 42 to ascertain if it is appropriate for the automatic call distributor 12 to perform the periodic generation of outdial calls to external units 22 identified by the received campaign record list. The predictive outdial call pacing algorithm of the campaign driver 40 indicates if an outdial call is enabled to be made based on the received ACD real time data statistics in memory table 42.

If the predictive outdial pacing algorithm of the campaign driver 40 indicates that the real time switching conditions at the ACD 12 permit the initiation of an outdial call then an answer detector 60 is acquired to monitor the outdial call progression. An answer detector is an electronic controlled device which preferably uses digital signal processing to determine the presence of actual voice signals or energy on a calling line to an external telephonic unit 22. The answer detector 60 identifies the presence of a human voice answering an outdial call connected by the switch 14 of the ACD 12.

The ACD 12 connects an answered outdial call to an internal telephonic unit 20 in response to the answer detector 60 determining the presence of actual voice energy at an external telephonic unit 22. The answered outdial call is connected by the central control processing unit 16 in accordance with a defined call routing application 46 in the ACD memory 18. The call routing application 46 which defines how the call is routed to an internal telephonic unit or group of internal units is identified as a part of the campaign definition information in the campaign definition table 44 for a particular calling campaign.

The central control processing unit 16 records data relating to the disposition of the outdialed call paced and initiated from the ACD 12. If an outdial call is answered at an external unit 22 the ACD 12 connects the call to a selected internal unit 20 and the disposition of the call is set at the campaign status record 48 to indicate an answered call. If the outdial call is not answered by an internal unit 22 then the disposition in the campaign status record 48 in the ACD memory 18 is set to indicate that the call was not answered. Once the call status information is logged at the campaign status record 48, the ACD 12 is queued for transmission to the maintenance terminal 30. The call status information is sent to the host computer 32 via the transaction link 34 to indicate to the host which ones of the telephone numbers of external units 22 identified in the campaign record list received outdial calls were answered and connected to internal units by the automatic call distributor 12.

Referring to Fig. 2, the procedural flow for the processing of the software program stored at the campaign driver 40, Fig. 1 begins at step 100, Fig. 2, in which the central control processing unit 16 operating the campaign driver software in the ACD memory 18 checks for a terminating record by accessing the campaign record list 65 of outdial call numbers received from the remote host data base computer 32, Fig. 1. If a terminating record is received from the host computer 32 or the maintenance terminal 30 then the running campaign driver 40 is stopped in step 102, Fig. 2. If there are no more outdial calling number records to dial but the campaign of outbound calls has not been stopped by receipt of a terminating record, then in step 104, no outdial call is attempted on the launch of the campaign driver 40, Fig. 1.

If there are more calling code numbers to outdial on the received campaign record list 65, the campaign driver 40 accesses the campaign definition table 44 and the ACD real time data table 42, in the ACD memory 18, to determine if the pacing algorithm for the switch 14 permits the generation of another outdial call in step 106, Fig. 2. If the pacing algorithms of the campaign driver 40, Fig. 1, indicate that an outdial call cannot be performed then in step 108, Fig. 2, no action is taken by the campaign driver 40, Fig. 1, on the present launch and the central control processing unit 16 waits for receipt of a subsequent launch to initiate another outdial call.

If the pacing algorithm in the campaign driver 40 indicates to the central processing unit 16 in step 106, Fig. 2, that the conditions of the automatic call distributor 12 permit the generation of another outdial call to an external telephonic unit 22 then in step 110, an answer detector 60, Fig. 1, is acquired by the central processing unit. In step 112, Fig. 2, an outbound call to an external telephonic unit 22, Fig. 1, is made from the ACD 12 through the external network 26 and the answer detector 60 monitors the call progression. In step 114, Fig. 2, the answer detector 60, Fig. 1, coupled with the central control processing unit 16 determines if the outdialed call is answered at an external telephonic unit 22.

If the outdialed call fails, then in step 116, Fig. 2, the disposition of the call is logged in the campaign status record 48, Fig. 1, of the ACD memory 18, indicating the reason for the failed outbound call. The processing returns to step 100 in which the campaign driver 40, Fig. 1, running at the ACD checks the received campaign record list 65, Fig. 2, for a terminating record. If the outbound or outdial call is answered by an external telephonic unit 22, then in step 118, Fig. 2, the outdial call is presented to the destination application in the application memory 46, Fig. 1, in accordance with the campaign definition in the campaign definition table 44 for the launch of outdial calls. In step 120, Fig. 2, the central processing unit 16, Fig. 1, logs the disposition of the particular outdial call as being answered in the campaign status record memory 48. Once the disposition of the outdial call is logged in the campaign status record 48, the campaign status 48 record for the launch of outdial calls in step 122, Fig. 2, is queued for transmission to the maintenance computer terminal 30.

While a detailed description of the preferred embodiment of the invention has been given, it should be appreciated that many variations can be made thereto without departing from the scope of the invention as set forth in the appended claims.

## Claims

1. In a telecommunication system having an automatic call distributor with a multiport switch controlled by a central control processing unit with an associated automatic call distributor memory for selectively connecting calls between internal telephonic units coupled with the call distributor and external telephonic units of an external telephonic network, the improvement being an internal predictive outdial calling system comprising:
means at the automatic call distributor for determining the pacing of outdial calls initiated by the automatic call distributor in accordance with changing switching conditions at the multiport switch; and
means at the automatic call distributor for providing information relating to said changing switching conditions on a real time basis to enable real time adjustments to the pacing by said determining means.

2. The telecommunication system of claim 1 in which the pacing determining means includes means at the automatic call distributor for providing preselected campaign definition information to enable the automatic call distributor to perform the pacing of outdial calls to external telephonic units.

3. The telecommunication system of claim 1 including means for connecting the outdial calls answered at the external telephonic units to selected internal telephonic units in accordance with the pacing determining means at the automatic call distributor.

4. The telecommunication system of claim 1 including means for sending to the automatic call distributor outdial call information codes identifying external telephonic units to receive outdial calls initiated from the automatic call distributor.

5. The telecommunication system of claim 4 in which the sending means includes a maintenance terminal coupled with the automatic call distributor having a list of the outdial calling codes.

6. The telecommunication system of claim 4 in which the sending means includes a host data base computer having a list of the outdial calling codes identifying external telephonic units to receive outdial calls initiated and paced from the automatic call distributor.

7. The telecommunication system of claim 6 including means at the automatic call distributor for providing call status information to the host computer indicating which ones of external telephonic units identified by the outdialing calling codes received outdial calls initiated from the automatic call distributor and connected to internal telephonic units via the automatic call distributor.

8. The telecommunication system of claim 4 including means responsive to receipt of the outdial call information codes for ascertaining the periodic generation of outdial calls to external telephonic units identified by the outdial call information codes.

9. The telecommunication system of claim 2 including means for determining the presence of actual voice signals at the external telephonic units in response to the connection of outdial calls initiated from the automatic call distributor.

10. The telecommunication system of claim 9 including means for recording data relating to the disposition of outdial calls paced and initiated from the automatic call distributor.

11. The telecommunication system of claim 9 including means for connecting outdial calls in response to the determining means determining the presence of actual voice signals at external telephonic units to internal telephonic units in accordance with a defined call routing application associated with the preselected campaign definition information.

12. In a telecommunication system having an automatic call distributor with a multiport switch controlled by a central control processing unit with an associated automatic call distributor memory for selectively connecting calls between internal telephonic units coupled with the call distributor and external telephonic units of an external telephonic network, the improvement being an internal predictive outdial calling system comprising:
means at the automatic call distributor for determining the pacing of outdial calls initiated by the automatic call distributor in accordance with preselected campaign definition information;
means at the automatic call distributor for automatically providing said campaign definition information to the pacing determining means to enable automatic operation of the pacing determining means.

13. The telecommunication system of claim 12 in which the pacing determining means includes means at the automatic call distributor for determining the pacing of outdial calls initiated by the automatic call distributor in accordance with changing switching conditions at the multiport switch, and including
means at the automatic call distributor for providing information relating to said changing switching conditions on a real time basis to enable real time adjustments to the pacing by said determining means.

14. The telecommunication system of claim 12 including means for connecting the outdial calls answered at the external telephonic units to selected internal telephonic units in accordance with the pacing determining means at the automatic call distributor.

15. The telecommunication system of claim 12 including means for sending to the automatic call distributor outdial call information codes identifying external telephonic units to receive outdial calls initiated from the automatic call distributor.

16. The telecommunication system of claim 15 in which the sending means includes means for directly providing outdial information codes to the automatic call distributor in lieu of sending said codes from a host data base computer.

17. The telecommunication system of claim 15 in which the sending means includes a host data base computer having a list of the outdial calling codes identifying external telephonic units to receive outdial calls initiated and paced from the automatic call distributor.

18. The telecommunication system of claim 17 including means at the automatic call distributor for providing call status information to the host computer indicating which ones of external telephonic units identified by the outdialing calling codes received outdial calls initiated from the automatic call distributor and connected to internal telephonic units via the automatic call distributor.

19. The telecommunication system of claim 13 including means for determining the presence of actual voice signals at the external telephonic units in response to the connection of outdial calls initiated from the automatic call distributor.

20. The telecommunication system of claim 19 including means for connecting outdial calls in response to the determining means determining the presence of actual voice signals at external telephonic units to internal telephonic units in accordance with a defined call routing application associated with the preselected campaign definition information.
